# EUROPEAN PATENT APPLICATION

(11) **EP 4 663 602 A2**
(43) Date of publication of application: **17.12.2025**
(21) Application number: 24199840.0
(22) Date of filing: 11.09.2024
(51) Int. Cl.: C01B 25/45, H01M 4/58, H01M 10/54

(54) **METHOD FOR RECYCLING WASTE LITHIUM-ION SECONDARY BATTERIES AND RECYCLED LITHIUM IRON PHOSPHATE POWDER OBTAINED THEREFROM**

(30) Priority: 12.06.2024 KR 20240076285
(71) Applicant: AK tree Co., Ltd, Seoul 06164 (KR); Libus987 Inc, Houston, TX 77036 (US)
(72) Inventor: LEE, Bong Kee, 04732 Seoul (KR); AHN, Hyo Soo, 44784 Ulsan (KR)
(74) Representative: Beck & Rössig European Patent Attorneys

(57) **Abstract**

An object of the present invention is to provide a method for recovering lithium iron phosphate powder, which is a positive electrode material, in economical and eco-friendly manner from a waste lithium-ion secondary battery using lithium iron phosphate as a positive electrode material, and to provide recycled lithium iron phosphate powder obtainable therefrom. In order to achieve the above-described object, a method for recycling a waste lithium-ion secondary battery according to the present invention includes (a) loading an object to be heat-treated into a heat-treatment furnace, the object being at least a part of a waste lithium-ion secondary battery in which lithium iron phosphate powder is a positive electrode material, and including the positive electrode material, (b) increasing the temperature inside the heat-treatment furnace to a range of 200 °C to 400 °C, (c) maintaining the increased temperature to heat treat the object to be heat-treated, and (d) discharging first powder produced after the completion of the heat treatment, wherein the first powder includes recycled lithium iron phosphate powder.

## Description

### BACKGROUND OF THE INVENTION

### 1. Field of the Invention

The present invention relates to recycled lithium iron phosphate powder obtainable by recycling a waste lithium-ion battery in which a positive electrode material is lithium iron phosphate, and a method for recycling the waste lithium-ion battery, and more particularly, to lithium iron phosphate powder obtainable by heat-treating a waste lithium-ion secondary battery at a low temperature, and a method for recycling the waste lithium-ion battery.

### 2. Description of the Related Art

As the automobile industry transitions from internal combustion engine vehicles to electric vehicles, Europe and China, which are the global growth axes of electric vehicles and secondary batteries, are promoting to expand the supply of electric vehicles and secure competitiveness through carbon dioxide regulations and eco-friendly vehicle road maps. Accordingly, it is expected that the global electric vehicle market will grow rapidly.

Since electric vehicle batteries are typically discarded after use for 5 years to 10 years, it is expected that the waste battery market will also be in full swing. The amount of electric vehicle waste batteries generated globally is expected to reach about 160 tons up to 2030, and various countries around Europe have made large investment for the development of a process of recovering valuable metals from waste batteries.

Unlike reuse, the waste battery recycling industry recovers valuable metals from waste batteries and recycles the valuable metals as raw materials, making it possible to solve environmental problems and stably secure valuable resources at the same time.

In general, waste battery recycling is performed by discharging, dismantling, and grinding waste batteries and then extracting valuable metals through a wet smelting process or a dry smelting process, and the dry smelting process which is suitable for mass treatment and has a high recovery rate has attracted attention.

In the dry smelting, powder obtained through the grinding is heated to a high temperature to remove an organic compound and a polymer component included in the ground powder, and then ground again to extract valuable metals using a strong acid in a wet manner.

The above-described dry smelting process requires a lot of time and many devices for discharge and grinding, and also requires complicated processes afterwards, making it less economical, and a product discharged after high-temperature heating contains a large amount of impurities, which lowers the extraction rate of valuable components obtainable from the whole powder, and is present in a bulky state, and thus, requires regrinding and the use of a strong acid in order to extract valuable components therefrom, which raises environmental problems.

Particularly, in recent years, the application of lithium-ion secondary batteries in which lithium iron phosphate is applied as a positive electrode material has been increasing, so that it has become an important task to recover lithium iron phosphate powder from waste lithium-ion secondary batteries.

### SUMMARY OF THE INVENTION

An object of the present invention is to provide a method for recovering lithium iron phosphate powder, which is a positive electrode material, in economical and eco-friendly manner from a waste lithium-ion secondary battery using lithium iron phosphate as a positive electrode material, and to provide recycled lithium iron phosphate powder obtainable therefrom.

In order to achieve the above-described object, a method for recycling a waste lithium-ion secondary battery according to the invention is characterized by including (a) loading an object to be heat-treated into a heat-treatment furnace, the object being at least a part of a waste lithium-ion secondary battery in which lithium iron phosphate powder is a positive electrode material, and including the positive electrode material, (b) increasing the temperature inside the heat-treatment furnace to a range of 200 °C to 400 °C, (c) maintaining the increased temperature to heat treat the object to be heat-treated, and (d) discharging first powder produced after the completion of the heat treatment, wherein the first powder includes recycled lithium iron phosphate powder.

In addition, the method for recycling a waste lithium-ion secondary battery according to an embodiment of the invention is characterized in that the first powder does not include an organic component, but includes fluorine in an amount of 2 wt% or less.

In addition, the method for recycling a waste lithium-ion secondary battery according to an embodiment of the invention is characterized in that the first powder does not include an organic component and fluorine.

In addition, the method for recycling a waste lithium-ion secondary battery according to an embodiment of the invention is characterized in that a gas generated inside the heat-treatment furnace in the step (b) and the step (c) is forcibly exhausted.

In addition, the method for recycling a waste lithium-ion secondary battery according to an embodiment of the invention is characterized in that the gas is forcibly exhausted by creating a negative pressure state inside the heat-treatment furnace in the step (b) and the step (c).

The method for recycling a waste lithium-ion secondary battery according to an embodiment of the invention is characterized in that the gas is forcibly exhausted through a fan disposed in the heat-treatment furnace in the step (b) and the step (c).

In the method for recycling a waste lithium-ion secondary battery according to an embodiment of the invention, the forcibly exhausting of the gas through the fan may be intermittently performed.

In the method for recycling a waste lithium-ion secondary battery according to an embodiment of the invention, the object to be heat-treated in the step (a) may be a positive electrode recovered by disassembling the waste lithium-ion battery.

In the method for recycling a waste lithium-ion secondary battery according to an embodiment of the invention, after the step (d), the first powder is washed with water and the water-washing treatment is performed with water at 30 °C or lower.

In the method for recycling a waste lithium-ion secondary battery according to an embodiment of the invention, further comprising, after the step (d), acid-treating the first powder.

In the method for recycling a waste lithium-ion secondary battery according to an embodiment of the invention, the recycled lithium iron phosphate powder included in the first powder may be powder in which a conductive agent or coating remain intact.

The method for recycling a waste lithium-ion secondary battery according to an embodiment of the invention may further include mixing the recycled lithium iron phosphate powder with a lithium compound and heat-treating the mixture in the range of 600 °C to 800 °C.

Meanwhile, recycled lithium iron phosphate powder recovered by the method for recycling a waste lithium-ion secondary battery described above according to the invention may be provided.

In addition, a lithium-ion secondary battery manufactured applied with recycled lithium iron phosphate powder recovered by the method for recycling a waste lithium-ion secondary battery described above according to the invention may be provided.

### ADVANTAGEOUS EFFECTS

A method for recycling a waste lithium-ion secondary battery according to the present invention is economical and eco-friendly at the same time, and thus, increases the recycling rate of the waste lithium-ion secondary battery and solves environmental problems which may occur during the recycling.

In addition, it is possible to manufacture a highly economical lithium-ion secondary battery by using recycled lithium iron phosphate powder obtainable according to the invention.

### BRIEF DESCRIPTION OF THE DRAWINGS

Fig. 1 shows the X-ray diffraction pattern of recycled lithium iron phosphate powder according to an embodiment of the invention;
Fig. 2 is transmission electron microscope images of recycled lithium iron phosphate powder according to an embodiment of the invention;
Fig. 3 shows the result of Raman spectrum analysis of recycled lithium iron phosphate powder according to an embodiment of the invention;
Fig. 4 shows the result of XRF analysis of recycled lithium iron phosphate powder according to an embodiment of the invention;
Fig. 5 shows images and the result of XRF analysis of powder treated and recovered according to a comparative example;
Fig. 6 shows scanning electron images of recycled lithium iron phosphate powder recovered according to an embodiment of the invention and the result of energy dispersive X-ray spectroscopy (EDX) mapping using the images; and
Fig. 7 is graphs showing the evaluation of cycle properties of recycled lithium iron phosphate powder recovered according to an embodiment of the invention.

### DETAILED DESCRIPTION OF THE EXEMPLARY EMBODIMENTS

Hereinafter, embodiments of the present invention will be described in detail with reference to the accompanying drawings so that those skilled in the art to which the present application pertains may easily practice the embodiments. The present invention may, however, be embodied in many different forms and should not be construed as limited to the embodiments set forth herein.

Throughout the present specification, when a part is referred to as "including" another component, it means the part may further include other components, rather than excluding other components, unless specifically stated otherwise.

The terms "about," "substantially," and the like used herein are used in a sense that is close to a numerical value presented with a manufacturing and material tolerance specific to a stated meaning, and is used to prevent an unscrupulous person from abusing a disclosure in which an exact or absolute value is stated in order to facilitate the understanding of the invention. In addition, the term "a step ~ing," or "a step of ~," as used throughout the specification, does not mean "a step for ~."

Throughout the specification, the term "a combination thereof included in an expression of the Markush form means one or more mixtures or combinations selected from the group consisting of components described in the expression of the Markush form, and means to include one or more selected from the group consisting of the components.

Throughout the present specification, the description of "A and/or B" means "A or B, or A and B."

According to an aspect of the invention, it is possible to provide a method for recycling a waste lithium-ion secondary battery, the method including (a) loading an object to be heat-treated into a heat-treatment furnace, the object being at least a part of a waste lithium-ion secondary battery in which lithium iron phosphate powder is a positive electrode material, and including the positive electrode material, (b) increasing the temperature inside the heat-treatment furnace to a range of 200 °C to 400 °C, (c) maintaining the increased temperature to heat treat the object to be heat-treated, and (d) discharging first powder produced after the completion of the heat treatment, wherein the first powder includes recycled lithium iron phosphate powder.

In the invention, a waste lithium-ion secondary battery for recycling treatment is a waste lithium-ion secondary battery using lithium iron phosphate as a positive electrode material.

A waste lithium-ion secondary battery introduced into a heat-treatment furnace may be the whole waste lithium-ion secondary battery cell, or at least a part thereof including such lithium iron phosphate. In addition, it may be black mass, which is powder produced by disassembling and crushing a waste lithium-ion secondary battery, or it may be a waste lithium-ion secondary battery discarded due to a defects, and so on, during a manufacturing process.

In addition, in an embodiment of the invention, in order to effectively recover lithium iron phosphate, a waste lithium-ion secondary battery may be disassembled, and only the positive electrode in which a current collector and a positive electrode material are combined may be separated and introduced into a heat-treatment furnace.

A typical waste lithium-ion secondary battery recycling process includes processes of disassembling a waste lithium-ion battery, pyrolyzing the disassembled battery at a high temperature, turning the pyrolyzed battery into bulk, and then crushing the bulk. As a result, the waste lithium-ion battery is ground in the state of bulk, which includes not only a positive electrode material and a negative electrode material to recover, but also a large amount of impurities including a case, a current collector, and the like, so that the positive electrode material and the negative electrode material do not remain in the state of raw materials and undergo significant deformation.

In comparison, in the recycling method according to the invention, an electrolyte solution is removed through a low-temperature heat treatment, and a binder included in a positive electrode is decomposed, thereby allowing lithium iron phosphate powder, which is a positive electrode material, to be simply separated from the current collector.

Recycled lithium iron phosphate powder, which is a positive electrode material separated as described above, may be reused as it is in the manufacture of a lithium-ion battery, or may be reused after going through processes such as simple cleaning or acid-treating.

In the invention, a heat-treatment process performed to recover recycled lithium iron phosphate powder may be performed in the range of 200 °C to 400 °C, or in the range of 200 °C to 350 °C, or 250 °C to 350 °C. By heating a battery at a relatively low temperature, a binder, an electrolyte solution, and the like included in the battery are removed by pyrolysis. Particularly, self-heating may be achieved by components such as a binder, and an electrolyte solution to achieve pyrolysis.

Compared to the typical recycling method, heat-treatment is performed at a low temperature, making it possible to reduce energy costs. In addition, as the lithium iron phosphate powder, which is a positive electrode material, is recovered without damage according to the low-temperature heat treatment, it is possible to recycle the recovered powder as it is without separate post-processing, which requires significant time and cost.

Meanwhile, in the step (b) and the step (c) described above, it is preferable that a gas generated inside the heat-treatment furnace is forcibly exhausted.

The important thing about the above-described discharge of a gas is that a gas generated by decomposition during the heat treatment of a binder, an electrolyte solution, and the like contains fluorine, and if the gas containing fluorine remains in the heat-treatment furnace, the gas combines with a positive electrode material, a negative electrode material, and the like to form a mass with a strong bond. If heat-treated powder is combined to form a mass as described above, it is difficult to for the mass to be powdered even through post-processing such as grinding. Therefore, it is important to discharge a fluorine-containing gas fast. However, heat-treatment at a high temperature as in the prior art inevitably causes the rapid generation of a gas containing a fluorine component, and accordingly, the gas remains in a heat treatment furnace for a long period of time, which accelerates the aggregation of powder.

In comparison, the waste lithium-ion secondary battery recycling method according to the invention is performed by controlling the decomposition rate of a binder and the like through low-temperature heat-treatment, so that the rapid generation of a gas containing a fluorine component is suppressed, thereby maintaining the amount of a generated gas at an appropriate level, and at the same time, the generated gas is forcibly exhausted, thereby minimizing the time during which a gas containing a fluorine component remains in a heat-treatment furnace and preventing the aggregation of powder caused by fluorine.

For the above-described forcibly exhausting of a gas during a heat-treatment process, a negative pressure state may be maintained inside a heat-treatment furnace, and a gas generated by the decomposition of a binder, an electrolyte solution, a separator, and the like caused by the heating of a waste lithium-ion secondary battery in the heat-treatment furnace may be discharged to the outside due to the maintenance of the negative pressure state. In order to maintain the above-described negative pressure state, the heat-treatment furnace may have a gas outlet and a pump for maintaining a negative pressure state connected to the outlet.

In addition, the exhausting of the atmosphere inside the furnace may be achieved through a fan disposed in the furnace. Through the fan, it is possible to continuously or intermittently discharge a decomposition gas generated in the heat-treatment furnace. If the discharge amount is too much, it may be difficult to increase and maintain the temperature inside the heat-treatment furnace, so that the discharge may be performed intermittently in conjunction with the internal temperature.

Therefore, the maintenance of the negative pressure inside the heat-treatment furnace or the emission of the internal atmosphere through the fan may be controlled in conjunction with the temperature inside the heat-treatment furnace.

Finally, by removing organic matters and a fluorine component inside, lithium iron phosphate, which is a positive electrode material, may be recovered in a powder state, and no additional process such as grinding is required, and the recovered lithium iron phosphate powder may be recycled as it is in the manufacture of a new battery.

First powder recovered after heat-treatment through the above-described waste lithium-ion secondary battery recycling method may include recycled lithium iron phosphate powder, but may not include an organic component and fluorine. Since the first powder does not include an organic component and fluorine due to the complete removal of impurities such as a binder through low-temperature heat-treatment and forcible exhaust, recycled lithium iron phosphate powder may be easily recovered in a powder state, and may be directly used in the manufacture of a lithium-ion secondary battery without any special re-processing. Here, the absence of fluorine means that the fluorine is not detected in the analysis by X-ray fluorescence spectrometry.

Meanwhile, the above-described first powder may not include an organic component, but may include fluorine in an amount of 2 wt% or less. Even if a small amount of fluorine is included, if the amount thereof is at a predetermined level or lower, it may be possible to recover a waste lithium-ion secondary battery in a powder state without the aggregation of powder.

In addition, the recycled lithium iron phosphate powder included in the first powder discharged after the heat-treatment process may be powder in which a conductive agent included in a positive electrode is complexed. Meanwhile, it is also possible to treat the first powder through an acid such as hydrochloric acid to remove the complexed conductive agent and recover pure lithium iron phosphate powder.

Meanwhile the recovered recycled lithium iron phosphate powder may deteriorate in performance due to insufficient lithium ions or a partially instable structure due to repeated recycling. In order to bring the above-described deteriorated performance back to the same level as the original performance, a process of mixing the powder with a lithium compound and subj ecting the mixture to post-heat treatment may be added. The post-heat treatment may be performed by mixing the recycled lithium iron phosphate powder recovered according to a general solid-phase process with lithium carbonate or lithium hydroxide, which is a lithium compound, and heat-treating the mixture at a high temperature (600 °C to 800 °C).

### [Example]

A waste lithium-ion secondary battery using lithium iron phosphate as a positive electrode material was treated according to the recycling method according to the invention to recover first powder.

A waste lithium-ion secondary battery not discharged was loaded into a heat-treatment furnace, and then the waste lithium-ion secondary battery was heat-treated while adjusting the temperature inside the heat-treatment furnace to 250 °C. The temperature was increased for 6 hours, and then adjusted to be maintained at the increased temperature for 12 hours. The internal atmosphere was discharged through a fan during the reaction, and the internal temperature was maintained in the range of 250±15 °C in conjunction with a temperature sensor.

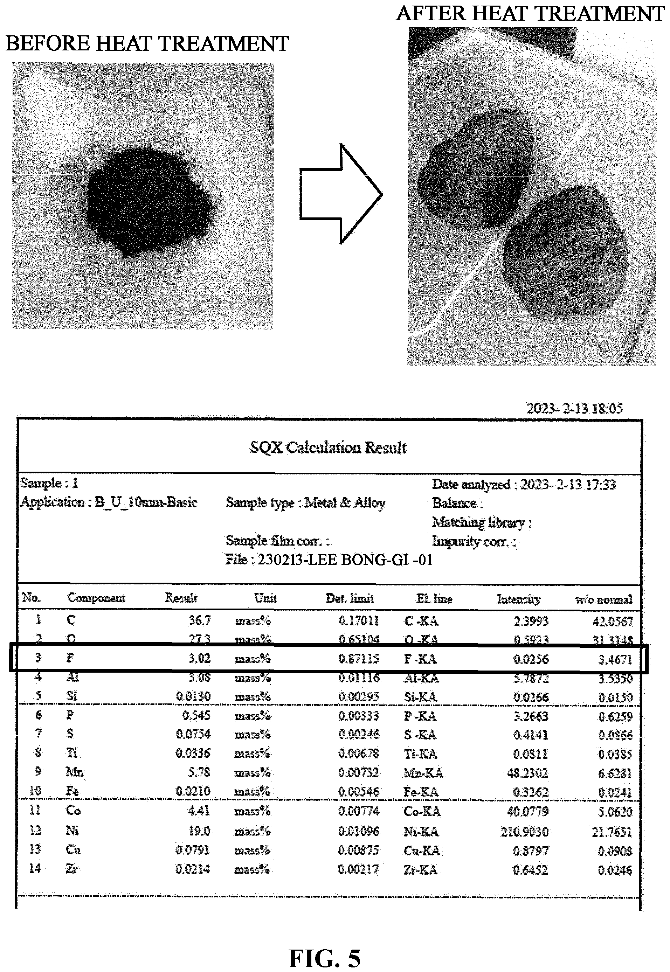

After the reaction was completed, a powdered material was recovered to obtain first powder. The first powder was added to water, sonicated, and filtered to separate and recover lithium iron phosphate powder.

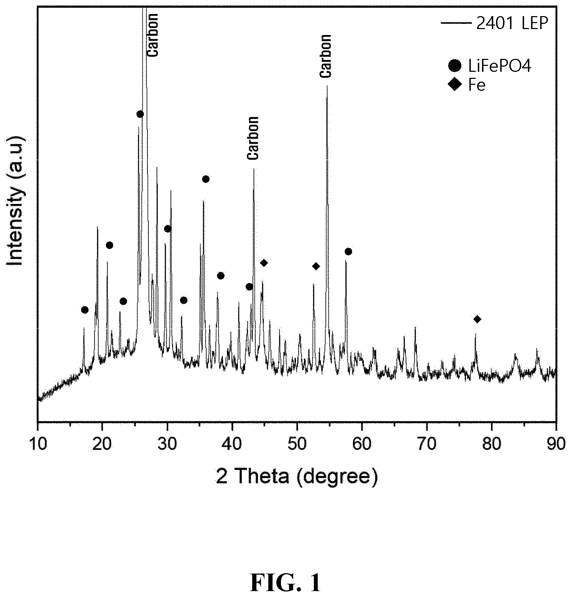

Fig. 1 shows the result of X-ray diffraction analysis of the recovered lithium iron phosphate powder. It was seen that the diffraction peak for lithium iron phosphate appeared strongly, and at the same time, the diffraction peak for crystalline carbon appeared.

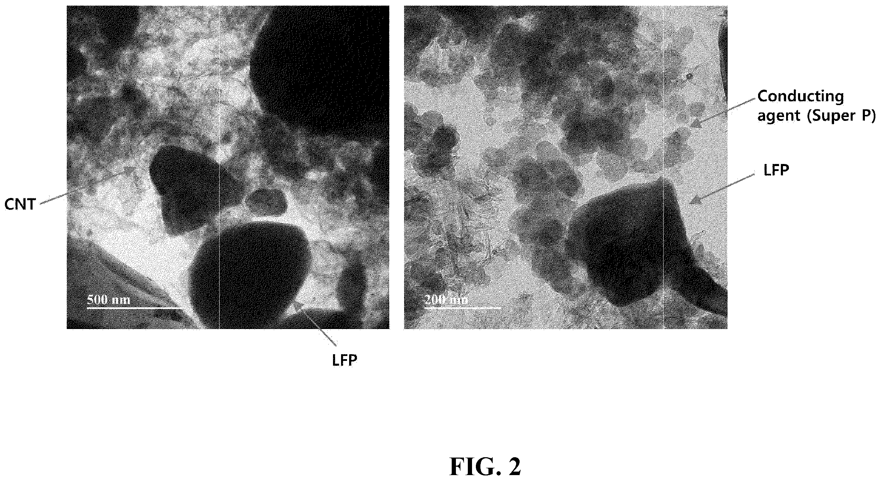

Fig. 2 is an observed transmission electron microscope image of the recovered lithium iron phosphate powder. It was seen that carbon nanotubes and graphite, which are conductive agents, were in a complexed state.

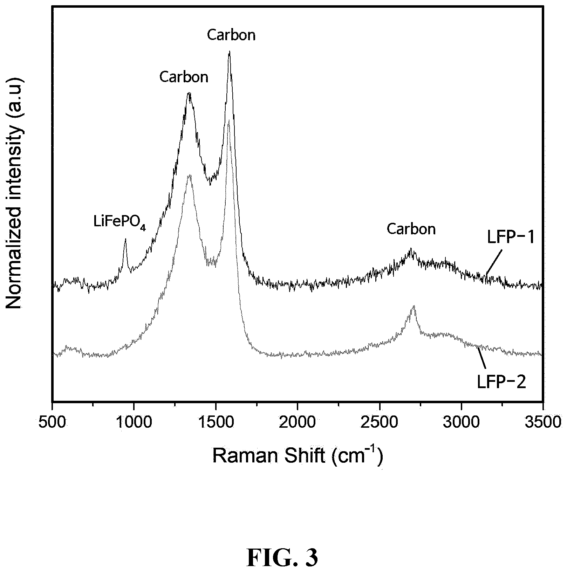

Fig. 3 shows the result of Raman analysis of lithium iron phosphate powder recovered after water-washing treatment. It can be seen that the powder does not show a peak related to organic matters other than lithium iron phosphate and carbon, which indicates that the organic matters are completely removed.

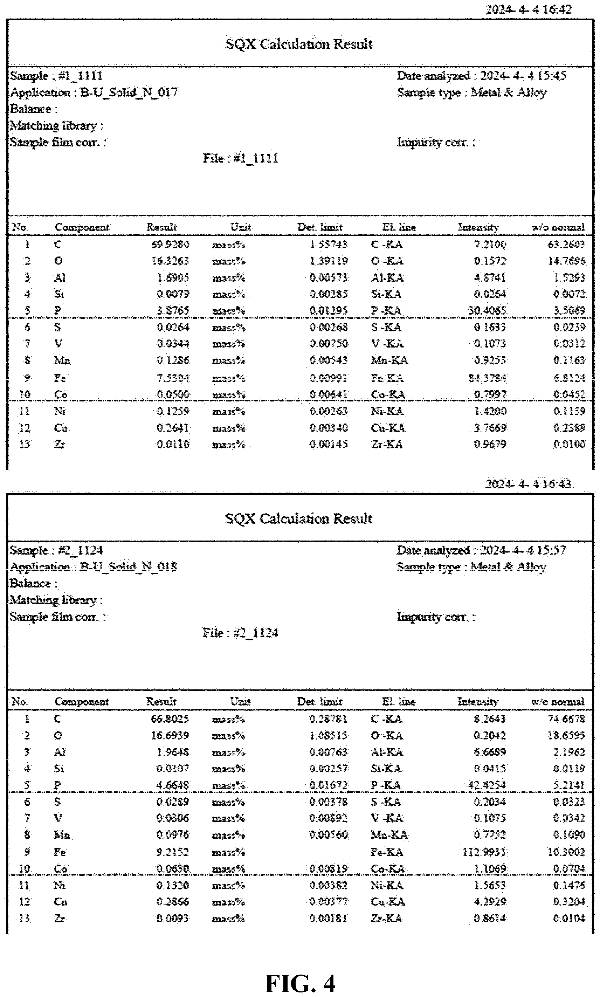

Fig. 4 shows the result of X-ray fluorescence (XRF) component analysis of the lithium iron phosphate powder recovered after the water-washing treatment, and it was seen that hydrofluoric acid was not detected.
Meanwhile, Fig. 5 shows powder recovered after performing heat treatment on a commercially available black mass at a low temperature without exhausting a gas. The powder recovered as described above is a firm mass, so that it was difficult to grind the same, and a large amount of fluorine was detected therefrom.

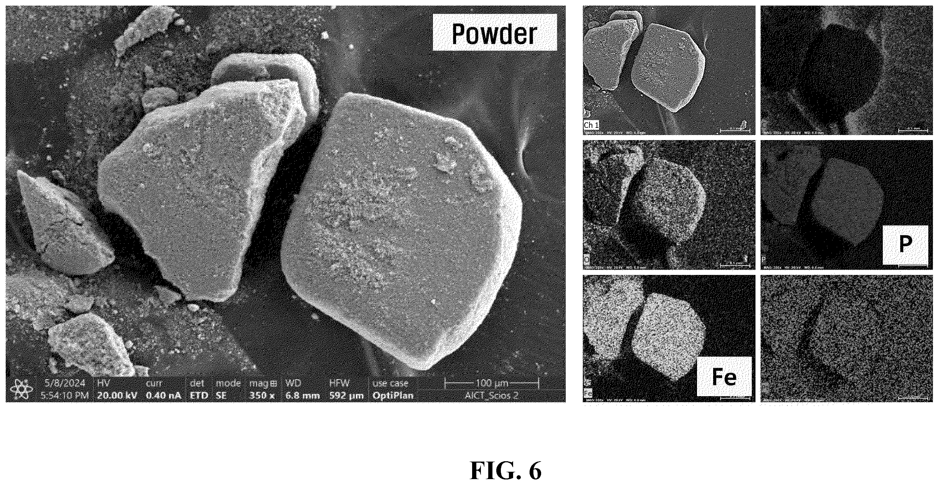

Fig. 6 shows observed scanning electron images of the recovered lithium iron phosphate powder and the result of energy dispersive X-ray spectroscopy (EDX) mapping using the images. It was seen that the binder was completely removed from the recovered lithium iron phosphate powder and the lithium iron phosphate positive electrode powder was preserved.

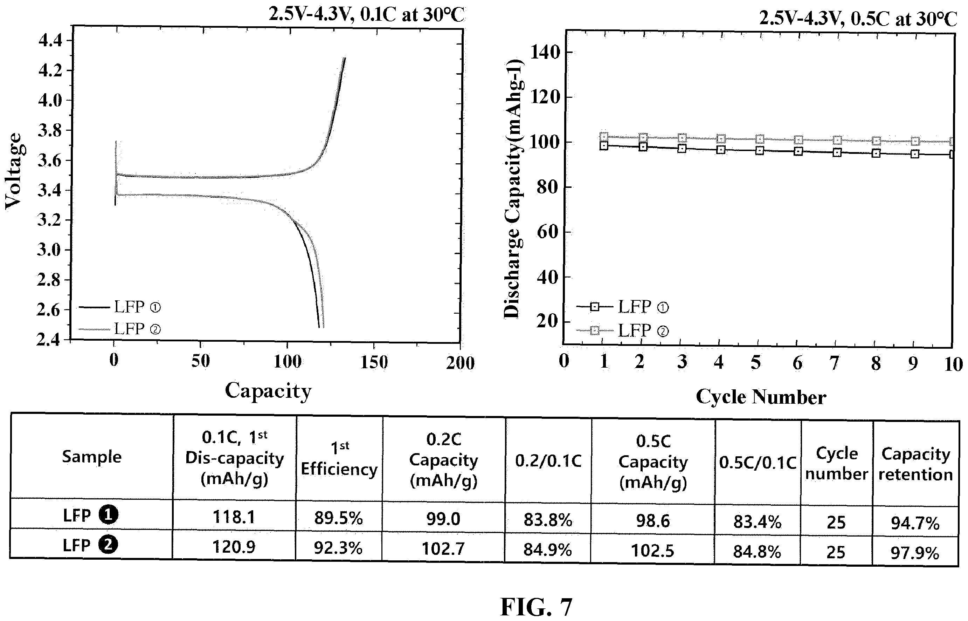

Fig. 7 shows the result of manufacturing a coin-cell by using the recovered lithium iron phosphate powder and performing a cell test on the coin-cell. The initial capacity was confirmed at a charge/discharge rate of 0. 1 C, and a cycle test was performed at 0.5 C. It was confirmed that the initial capacity was equivalent to the discharge capacity of lithium iron phosphate before general recycling, and it was confirmed that the cycle properties were also stably maintained.

As described above, recycled lithium iron phosphate powder recovered through the method for recycling a waste lithium-ion battery according to the invention may be directly used in the manufacture of a lithium-ion battery without a separate post-processing, so that it is possible to manufacture a highly economical lithium-ion battery. In addition, since the method is performed through low-temperature heat treatment, it is possible to increase the recycling rate of waste lithium-ion secondary batteries and to solve environmental problems which may occur during the recycling.

## Claims

1. A method for recycling a waste lithium-ion secondary battery, the method comprising:
(a) loading an object to be heat-treated into a heat-treatment furnace, the object being at least a part of a waste lithium-ion secondary battery in which lithium iron phosphate powder is a positive electrode material, and including the positive electrode material;
(b) increasing the temperature inside the heat-treatment furnace to a range of 200 °C to 400 °C;
(c) maintaining the increased temperature to heat treat the object to be heat-treated; and
(d) discharging first powder produced after the completion of the heat treatment, wherein the first powder includes recycled lithium iron phosphate powder.

2. The method of Claim 1, wherein the first powder does not comprise an organic component, but comprises fluorine in an amount of 2 wt% or less.

3. The method of Claim 1, wherein the first powder does not comprise an organic component and fluorine.

4. The method of one of Claims 1 to 3, wherein a gas generated inside the heat-treatment furnace in the step (b) and the step (c) is forcibly exhausted.

5. The method of Claim 4, wherein the gas is forcibly exhausted by creating a negative pressure state inside the heat-treatment furnace in the step (b) and the step (c).

6. The method of Claim 4, wherein the gas is forcibly exhausted through a fan disposed in the heat-treatment furnace in the step (b) and the step (c).

7. The method of Claim 6, wherein the forcibly exhausting of the gas through the fan is intermittently performed.

8. The method of one of Claims 1 to 7, wherein the object to be heat-treated in the step (a) is a positive electrode recovered by disassembling the waste lithium-ion battery.

9. The method of one of Claims 1 to 8, wherein after the step (d), the first powder is washed with water and the water-washing treatment is performed with water at 30 °C or lower.

10. The method of one of Claims 1 to 9, further comprising, after the step (d), acid-treating the first powder.

11. The method of one of Claims 1 to 10, wherein the recycled lithium iron phosphate powder included in the first powder is powder in which a conductive agent or coating remain intact.

12. The method of one of Claims 1 to 11, further comprising mixing the recycled lithium iron phosphate powder with a lithium compound and heat-treating the mixture in the range of 600 °C to 800 °C.

13. Recycled lithium iron phosphate powder recovered by the method for recycling a waste lithium-ion secondary battery according to any one of Claim 1 to Claim 12.

14. A lithium-ion secondary battery manufactured using recycled lithium iron phosphate powder recovered by the method for recycling a waste lithium-ion secondary battery according to any one of Claim 1 to Claim 12.
